# EUROPÄISCHE PATENTSCHRIFT

(11) **EP 0 728 561 B1**
(45) Veröffentlichungstag und Bekanntmachung des Hinweises auf die Patenterteilung: **07.07.1999**
(21) Anmeldenummer: 95102688.9
(22) Anmeldetag: 24.02.1995
(51) Int. Cl.: B27D 5/00, B23Q 3/155, B27G 11/00

(54) **Einrichtung zur Durchführung von Bearbeitungsvorgängen an plattenförmigen Werkstücken**
Device for machining plate-like workpieces
Dispositif pour effectuer une séquence d'opérations sur des pièces à usiner en forme de plaques

(43) Veröffentlichungstag der Anmeldung: 28.08.1996
(73) Patentinhaber: HOMAG MASCHINENBAU AG, D-72296 Schopfloch (DE)
(72) Erfinder: Frey, Karl, Dipl.-Ing., D-72296 Schopfloch (DE); Kalmbach, Kurt, Dipl.-Ing. (FH), D-72293 Glatten (DE); Schmid, Johannes, Dipl. Betriebswirt, D-72181 Starzach-Wachendorf (DE)
(74) Vertreter: Kohlmann, Karl Friedrich, Dipl.-Ing.

(56) Entgegenhaltungen:
- DE-A- 3 413 066
- DE-A- 3 702 154
- GB-A- 2 265 563
- US-A- 5 246 533
- HOLZ ALS ROH- UND WERKSTOFF, Bd. 47, Nr. 3, Seite 114 XP 000009078 'Neues CNC-gesteuertes Bearbeitungszentrum'

## Beschreibung

Die vorliegende Erfindung betrifft eine Einrichtung zur Durchführung von Bearbeitungsvorgängen an Werkstücken, insbesondere an plattenförmigen Werkstücken aus Holz bzw. Holzwerkstoffen, mit
- einer Spindeleinheit zur Aufnahme von Bearbeitungswerkzeugen und Bearbeitungsaggregaten,
- einer Führungsanordnung zur Bewegung der Spindeleinheit zumindest in X- und Y-Richtung,
- einem Bearbeitungstisch zur Aufnahme mindestens eines zu bearbeitenden Werkstücks,
- sowie einem der Spindeleinheit zugeordneten Werkzeug- und Aggregate-Magazin zur Aufnahme der ein- und auszuwechselnden Bearbeitungswerkzeuge und Bearbeitungsaggregate.

Bearbeitungseinrichtungen dieser Art sind beispielsweise aus der DE 37 02 154 bekannt. Bei diesen bekannten Bearbeitungseinrichtungen trägt die Führungseinrichtung einen Support, an dem nicht nur die Spindeleinheit für die Bearbeitungswerkzeuge bzw. Bearbeitungsaggregate, sondern auch ein sogenanntes Verleimteil mit allen für das Anleimen von Kanten erforderlichen Einrichtungen angeordnet ist. Während der eigentlichen spanabhebenden Bearbeitung an den plattenförmigen Werkstücken mittels der Spindeleinheit muß der Support das Verleimteil und somit dessen gesamte Masse mitbewegen. In dieser Phase ist das Verleimteil auch dem bei der spanabhebenden Bearbeitung zwangsläufig entstehenden Späne- und Staubanfall ausgesetzt. Darüber hinaus kann die Umstellung von einer Kante auf eine andere und die Einstellung bzw. Justierung der für den Kantenanleimvorgang erforderlichen Elemente lediglich bei Stillstand der Einrichtung durchgeführt werden.

Aufgabe der vorliegenden Erfindung ist es, ausgehend von einer Einrichtung der eingangs geschilderten Gattung, ein vollkommen neuartiges Maschinenkonzept zu schaffen, das bei einfacherem konstruktivem und steuerungstechnischen Aufbau eine flexiblere Arbeitsweise bei geringeren Stillstandszeiten für Umrüst- und Einstellarbeiten ermöglicht.

Diese Aufgabe wird erfindungsgemäß dadurch gelöst, daß die Einrichtung eine Kantenanleimstation aufweist, die aus einer im wesentlichen stationär angeordneten Versorgungseinheit und mindestens einer von dieser abkoppelbaren Anleimeinheit besteht, welche in die Spindeleinheit einwechselbar ist.

Der Erfindung liegt der Gedanke zugrunde, an einer an sich bekannten Einrichtung der gattungsgemäßen Art mit nur einer Spindeleinheit in deren Einflußbereich eine neuartige Kantenanleimstation vorzusehen, die erfindungsgemäß im wesentlichen aus zwei Grundelementen, nämlich einer Versorgungseinheit und einer Anleimeinheit besteht. Versorgungseinheit und Anleimeinheit bilden eine einheitliche Station, die zum einen alle für einen Kantenanleimvorgang erforderlichen apparativen Elemente und zum anderen die für diesen Vorgang erforderlichen Verbrauchsstoffe und Materialien enthält.

Das besondere an dieser einheitlichen Station ist, daß nach einer Vorbereitungsphase, in der die technologischen Voraussetzungen für den nachfolgenden Anleimvorgang geschaffen werden, ein Grundelement der Station, nämlich die Anleimeinheit von der Versorgungseinheit abgekoppelt und von der Spindeleinheit im Pick-up-Verfahren übernommen werden kann. Die derart übernommene Anleimeinheit wird dann von der Spindeleinheit auf einem vorgegebenen Weg zur Durchführung des Kantenanleimvorganges um das Werkstück herumgeführt. Nach abgeschlossenem Kantenanleimvorgang setzt die Spindeleinheit die Anleimeinheit wieder auf der Versorgungseinheit ab, an der sie erneut angekoppelt wird. Im Anschluß daran kann dann in der in dieser Weise wieder komplettierten Station der nächste Kantenanleimvorgang vorbereitet werden.

Eine nach diesem Konzept gestaltete Einrichtung ist hinsichtlich der Bearbeitungsmöglichkeiten wesentlich breiter, universeller und flexibler einsetzbar als Einrichtungen der bekannten Art. Sie ist jederzeit nachrüstbar und erbringt eine wesentliche Verbesserung auf dem Gebiet der sogenannten Komplettbearbeitung von Werkstücken. Werden die Herstellungskosten für nach dem erfindungsgemäßen Konzept gestalteten Einrichtungen in Relation zur breiteren, universelleren und flexibleren Einsetzbarkeit gesetzt, ergibt sich eine Verbesserung des Preis-Leistungs-Verhältnisses.

Die beiden Grundelemente der Kantenanleimstation, nämlich die Versorgungseinheit und die Anleimeinheitt können je nach Anwendungszweck jeweils einfach oder komplex gestaltet sein. In der einfachsten Ausführung wird die Versorgungseinheit beispielsweise die Einrichtungen für die Leimaufbereitung (Granulatbehälter, Aufschmelzeinheit, Heizung oder dergleichen) sowie einen Speicher für Kantenmaterialien enthalten. Die zugehörige Anleimeinheit wiederum wird bei dieser einfachen Ausführung zumindest eine Leimauftragsrolle und eine Kantenandruckrolle, eine Zuführvorrichtung für das Kantenmaterial sowie eine lediglich für den jeweils auszuführenden Kantenanleimvorgang ausreichende Menge von Leim und Kantenmaterialien enthalten.

Je nach Aufgabe und Anwendungszweck kann auch mehr Technik in der Versorgungseinheit oder in der Anleimeinheit integriert sein. Wesentlich ist lediglich, daß jeweils möglichst viel Technik in der im wesentlichen stationären Versorgungseinheit und möglichst wenig Technik, und insbesondere Masse, in der zugehörigen Anleimeinheit untergebracht sind.

Die Versorgungseinheit kann bei einer erfindungsgemäßen Kantenanleimstation aus einem oder mehreren Versorgungsmodulen bestehen. Diese können zur Aufnahme von einer oder auch mehreren Anleimeinheiten ausgerüstet sein. Die Anleimeinheiten können dabei für unterschiedliche Anwendungszwecke und den Einsatz von unterschiedlichem Kanten- und Leimmaterial eingerichtet sein. So kann beispielsweise eine Anleimeinheit für den sogenannten direkten Leimauftrag und eine anderes Anleimeinheit mit einer Aktivierungseinrichtung für vorbeschichtete Kanten ausgestattet sein. In einem solchen Falle sind keinerlei Umbauarbeiten bei einer Umstellung von Kantenmaterial für direkten Leimauftrag auf vorbeschichtete Kanten oder umgekehrt erforderlich.

In ihrer einfachsten Ausführung kann die Kantenanleimstation in das Werkzeug- und Aggregatemagazin integriert sein. Bei einem bevorzugten Ausführungsbeispiel der vorliegenden Ausführung ist die Kantenanleimstation jedoch als zusätzlich zum Werkzeug- und Aggregatemagazin vorgesehene, separate Station ausgebildet. Diese separate Station kann grundsätzlich an jeder beliebigen, für die Spindeleinheit erreichbaren Stelle der Einrichtung angeordnet sein. Vorteilhaft ist es jedoch, wenn die Kantenanleimstation seitlich im Bereich des Endes des Verfahrweges der Spindeleinheit in X-Richtung angeordnet ist. Auf diese Weise wird ein vollkommen neues Maschinenkonzept geschaffen, welches im wesentlichen folgende Möglichkeiten und Vorteile eröffnet:
a) Die Kantenanleimstation kann als modular an die Maschine anbaubare Einheit ausgebildet sein;
b) die Kantenanleimstation ermöglicht eine beliebig erweiterbare Kantenspeicherung, die während der Maschinenlaufzeit beschickt werden kann;
c) alle für den Betrieb notwendigen Einricht- und Vorbereitungsarbeiten für das Kantenmaterial, die Einrichtungen zum Vor- und Aufbereiten sowie Übergeben von Leim und die Einrichtungen zum Zuführen von Kantenmaterial zu der Anleimeinheit bzw. zu den Anleimeinheiten einschließlich möglicherweise erforderliche Umstellarbeiten sind während der Maschinenlaufzeit möglich;
d) aufgrund der Ausgestaltung als separate Station ist eine sehr einfache Abschirmung gegenüber Staub und Spänen möglich.

Für den Standardanwendungsfall ist es vorteilhaft, die Versorgungseinheit der Kantenanleimstation fest mit der Führungsanordnung der Einrichtung zu verbinden. In einem solchen Fall ist die Versorgungseinheit absolut stationär angeordnet.

Für besondere Anwendungsfälle kann es jedoch zweckmäßig sein, die Versorgungseinheit der Kantenanleimstation quasistationär anzuordnen, d.h. entlang einer Führung in Grenzen verschiebbar anzuordnen.

Für den Fall, daß eine Versorgungseinheit einer Kantenanleimstation modular aufgebaut ist, d.h. aus mehreren Versorgungsmodulen besteht, sind verschiedenste Maschinenkonzepte möglich. So können die Versorgungsmodule beispielsweise stationär nebeneinander angeordnet sein. Für spezielle Anwendungsgebiete kann es jedoch auch zweckmäßig sein, daß die Versorgungsmodule entlang einer Führung in Grenzen verschiebbar angeordnet sind. Es ist auch möglich, die Versorungsmodule auf einem Drehteller anzuordnen.

Wie bereis beschrieben, kann jede Versorgungseinheit bzw. jedes Versorgungsmodul mit Einrichtungen zum Vor- und Aufbereiten sowie zum Übergeben von Leim an die jeweils zugeordnete Anleimeinheit ausgestattet sein. Diese Einrichtungen können beispielsweise einen Granulatförderer, eine Aufschmelzeinrichtung sowie eine Rühreinrichtung umfassen. Zweckmäßigerweise wird dabei jede Versorgungseinheit bzw. jedes Versorgungsmodul eine Aufbereitungseinheit für den fertigen Leim aufweist, der in dieser Einheit auf Bearbeitungstemperatur oder einer niedrigeren Temperatur gehalten wird. Die zugeordnete Anleimeinheit wiederum kann einen mobilen Behälter umfassen, der über eine Zuführeinrichtung aus der Aufbereitungseinheit versorgt wird. Der mobile Behälter kann beheizt oder unbeheizt sein. Je nach Anwendungszweck kann er eine geringe, jeweils lediglich für einen Arbeitsgang ausreichende Menge oder eine größere Menge von Leim enthalten.

Jede Versorgungseinheit bzw. jedes Versorgungsmodul ist darüber hinaus mit Einrichtungen zum Bereitstellen von Kantenmaterial ausgestattet. Dieses Kantenmaterial kann Streifen- oder Endlosware sein. Jedes Versorgungsmodul kann für die Verarbeitung eines bestimmten Kantenmateriales ausgerüstet sein.

Die Versorgungseinheiten bzw. die Versorgungsmodule könne darüber hinaus Einrichtungen zur Kantenvergütung beinhalten. So kann anstelle einer Anleimeinheit auch ein spezielles Aggregat zum Füllen von Hohlräumen an den Kanten der plattenförmigen Werkstücke eingesetzt werden. Eine weitere Versorgungseinheit bzw. ein weiteres Versorgungsmodul kann bei einer derartigen Anordnung Einrichtungen zum Heißprägen, wie beispielsweise eine Heizwalze und eine Abwickeleinrichtung für Transferdecorfolien aufweisen.

Für die Verarbeitung von Kanten mit Steg kann es zweckmäßig sein, eine Erwärmungsvorrichtung für die Kanten in der Versorgungs- und/oder in der Anleimeinheit vorzusehen.

Die Anleimeinheit kann für komplexe Anwendungsfälle verschiedene Einrichtungen zum Aufbringen von Leim und von Druck auf die Kanten umfassen. So ist es aufgrund des erfindungsgemäßen Konzeptes beispielsweise ohne weiteres möglich, nacheinander verschiedene Druckrollen einzuwechseln und Andruck-/Anleimaufgaben in verschiedenen Stufen, d.h. Schritt für Schritt zu realisieren. Im Bedarfsfalle können dabei ohne weiteres Aktivierungs- und Erwärmungsphasen zwischengeschaltet und die hierfür erforderlichen Einrichtungen in jeder Phase aus der Versorgungseinheit bzw. den Versorgungsmodulen eingewechselt werden.

Wie bereits dargestellt, ermöglicht die Anordnung der Kantenanleimstation als separate Station eine sehr einfache Abschirmung gegenüber Staub und Spänen.

So fällt bei der Bearbeitung von plattenförmigen Werkstücken systembedingt aufgrund der Zerspanungsarbeit eine große Menge von Spänen und insbesondere Staub an. Die für das Anleimen von Kanten erforderlichen Einrichtungen sind jedoch hochgradig staubempfindlich. Durch die separate Anordnung können diese staubempfindlichen Teile auf einfache Weise perfekt abgeschirmt werden. Auch die abkoppelbare Anleimeinheit kommt beim Einwechseln in die Spindeleinheit erst dann zum Einsatz, wenn die staub- und späneverursachende, spanabhebende Bearbeitung der Spindeleinheit bereits abgeschlossen ist.

Grundsätzlich kann mit der erfindungsgemäßen Einrichtung jede Art von Anleimaufgabe realisiert werden. Bei entsprechender Einrichtung und Ausstattung mit einer Kappstation ist auch eine sogenannte 360°-Verleimung ohne weiteres möglich. Im Falle der Anordnung einer schwenkbaren Kappstation kann auch eine optimale Stoßfuge realisiert werden.

Für den Fall, daß die Anleimeinheit durch die Spindel der Spindeleinheit angetrieben wird, wird in der Anleimeinheit ein Untersetzungsgetriebe vorgesehen. Im Bedarfsfalle ist es jedoch auch möglich, die Anleimeinheit mit einem eigenen Antrieb auszustatten und auf diese Weise die Spindeleinheit lediglich zur Aufnahme und Führung der Anleimeinheit einzusetzen.

Gegenüber einer Bearbeitungseinrichtung der eingangs beschriebenen Art, wie sie beispielsweise aus der DE 37 02 154 bekannt sind, hat eine Einrichtung der erfindungsgemäßen Art eine Reihe von Vorteilen.

So haben Einrichtungen der erfindungsgemäßen Art einen erheblich einfacheren konstruktiven Aufbau, da der gesamte Aufwand für das neben der Spindeleinheit angeordnete Verleimteil nicht erforderlich ist. So müssen bei der bekannten Bearbeitungseinrichtung die Mittel zur Bewegung und Steuerung des Verleimteiles vorhanden sein. Bei der erfindungsgemäßen Einrichtung dagegen werden für die einwechselbare Anleimeinheit, die ohnehin vorhandenen maschinellen und steuerungstechnischen Mittel der Spindeleinheit eingesetzt. Auf diese Weise ergibt sich nicht nur eine Massenreduzierung und damit eine Verbesserung hinsichtlich der Dynamik, sondern auch eine wesentlich vereinfachte Programmierung, da alle Bearbeitungen zentrisch in der Hauptspindel realisiert werden.

Ein wesentlicher Vorteil gegenüber der bekannten Bearbeitungseinrichtung nach der DE 37 02 155 ist darüber hinaus, daß sich durch den Wegfall des Verleimteiles in X-Richtung eine geringere Maschinenlänge bei gleichgroßer Bearbeitungsfläche ergibt.

Grundsätzlich kann das Einwechseln der Anleimeinheit in die Spindeleinheit in verschiedenster Weise erfolgen. Eine besonders vorteilhafte Ankoppelung wird jedoch über eine Hohlschaftkegelaufnahme erreicht.

Um eine hohen Anforderungen gerecht werdende Ankoppelung zu erreichen, ist es vorteilhaft, im Bereich des Umfanges der Hohlschaftkegelaufnahme weitere Aufnahmen vorzusehen, die zusammen mit der Hohlschaftkegelaufnahme eine statisch belastbare Schnittstelle bilden. Eine universell einsetzbare Schnittstelle wird bei einer derartigen Konstellation dann erreicht, wenn die weiteren Aufnahmen Anschlußelemente für Pneumatik sowie Antriebs- und Steuerstrom aufweisen.

Im folgenden ist zur weiteren Erläuterung und zum besseren Verständnis ein Ausführungsbeispiel der Erfindung unter Bezugnahme auf die beigefügten Zeichnungen näher beschrieben und erläutert.
- Fig. 1: schematisch in einer Draufsicht eine komplette Einrichtung zur Durchführung von Bearbeitungsvorgängen an plattenförmigen Werkstücken,
- Fig. 2: zeigt schematisch in einer Draufsicht ein Ausführungsbeispiel einer abkoppelbaren Anleimeinheit im Zusammenwirken mit einem Werkstück, und
- Fig. 3: zeigt schematisch in einer Seitenansicht das Ausführungsbeispiel der Anleimeinheit gemäß Fig. 2 ohne Werkstück.

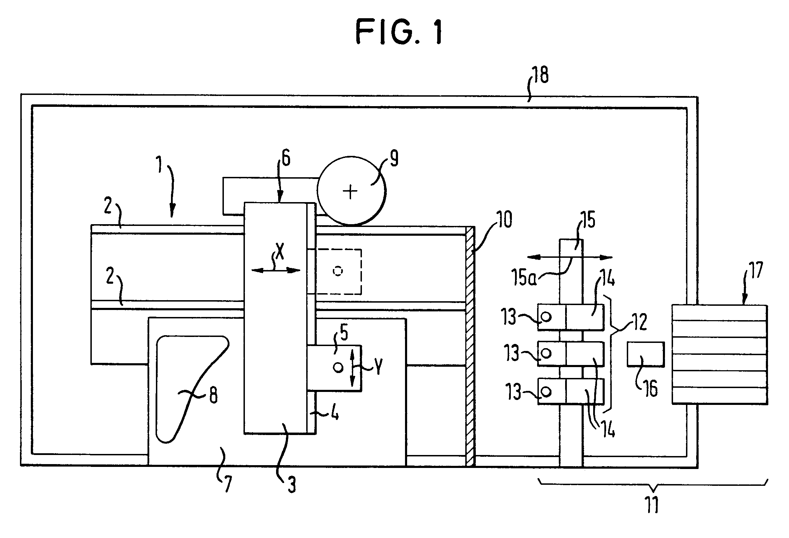

Wie aus Fig. 1 hervorgeht, umfaßt die Einrichtung zur Durchführung von Bearbeitungsvorgängen ein Maschinengestell 1, das mit zwei in X-Richtung verlaufenden Geradführungen 2 ausgestattet ist. Auf den Geradführungen 2 ist ein Ständer in X-Richtung verfahrbar gelagert, der auf seiner Oberseite einen Ausleger 3 trägt. Der Ausleger 3 besitzt an seiner in Fig. 1 rechten Seite eine Y-Richtung verlaufende Geradführung 4, an der eine Spindeleinheit 5 in Y-Richtung verfahrbar angeordnet ist. Die Geradführung 2 des Maschinengestelles 1 bildet zusammen mit dem Ständer, dem Ausleger 3 und den Geradführungen 4 eine Führungsanordnung 6 zur Bewegung der Spindeleinheit 5 in einer horizontalen Ebene in X- und Y-Richtung. Zwischen der Y-Richtung und der Spindeleinheit ist noch eine Z-Geradführung angeordnet.

Auf dem Maschinengestell 1 ist unter dem Ausleger 3 ein Bearbeitungstisch 7 angeordnet, auf dem ein Werkstück 8 angeordnet ist. Das Werkstück 8 ist auf dem Bearbeitungstisch 7 mit herkömmlichen Saugeinrichtungen (nicht dargestellt) festspannt.

Auf der dem Bearbeitungstisch 7 entgegengesetzten Seite ist an dem Ausleger 3 ein Werkzeug- und Aggregatemagazin 9 befestigt, das die für die Durchführung der Bearbeitungsvorgänge an dem Werkstück 8 erforderlichen Bearbeitungswerkzeuge und Bearbeitungsaggregate trägt.

Das Werkzeug- und Aggregatemagazin 9 befindet sich im Einflußbereich der Spindeleinheit 5, so daß diese entsprechend den Vorgaben das jeweilige Werkzeug bzw. Aggregat, dem Magazin 9 entnehmen und nach erfolgter Bearbeitung wieder in diesem absetzen kann.

Wie aus Fig. 1 hervorgeht, ist seitlich im Bereich des rechten Endes des Verfahrweges für den Ausleger 3 bzw. die Spindeleinheit 5 eine Schutzwand 10 angeordnet. Hinter dieser Schutzwand 10 ist eine Kantenanleimstation 11 angeordnet, die im Prinzip aus einer im wesentlichen stationär angeordneten Versorgungseinheit 12 sowie von dieser abkoppelbaren Anleimeinheiten 13 besteht, welche in die Spindeleinheit 5 einwechselbar sind.

Im vorliegenden Ausführungsbeispiel besteht die Versorgungseinheit 12 aus drei Versorgungsmodulen 14, die jeweils eine Anleimeinheit 13 tragen.

Die Versorgungsmodule 14 mit den abkoppelbaren Anleimeinheiten 13 sind im vorliegenden Ausführungsbeispiel auf einer sogenannten Energieschiene 15 montiert, die in Richtung des Pfeiles 15a in X-Richtung hin- und herverfahrbar ist, und die Versorgung und Steuerung der Versorgungsmodule 14 erforderlichen Leitungen aufweist. Die Versorgungsmodule 14 sind darüber hinaus auf der Energieschiene in Längsrichtung, d.h. in Y-Richtung hin- und herverfahrbar.

Auf der der Schutzwand 10 entgegengesetzten Seite schließt sich an die Versorgungsmodule 14 eine Einrichtung 16 zum Zuführen von Kantenmaterial an. Die Einrichtung 16 steht mit einem Kantenmagazin 17 in Verbindung, in dem Kanten verschiedenster Art bereitgehalten werden und über die Einrichtung 16 den Versorgungsmodulen 14 bzw. den Anleimeinheiten 13 zugeführt werden können.

Die gesamte Einrichtung ist von einer Umzäunung 18 umgeben, die lediglich unmittelbaren Zugang im Bereich des Bearbeitungstisches 7, des Kantenmagazins 17 und den Versorgungsmodulen 14 ermöglicht.

Zur Bearbeitung wird ein Rohling eines Werkstückes 8 (oder auch mehrere Werkstücke) auf dem Bearbeitungstisch 7 ausgerichtet und auf diesem in bekannter Weise über eine Saugeinrichtung festgespannt.

Ist dies erfolgt, so fährt die Spindeleinheit 5 in Y-Richtung zurück in den Bereich des Werkzeug- und Aggregatemagazins 9 und übernimmt (beispielsweise im Pick-up-Verfahren) das für den jeweiligen Bearbeitungsvorgang erforderliche Werkzeug oder Aggregat.

Ist das jeweilige Werkzeug oder Aggregat in der Spindeleinheit 5 aufgenommen, so wird die Spindeleinheit durch die Führungsanordnung 6 zur Durchführung der Bearbeitungsvorgänge um das Werkstück 8 herumbewegt.

Hat das Werkstück 8 seine endgültige Form erhalten und sind gegebenenfalls weitere Bearbeitungsvorgänge am Werkstück 8 abgeschlossen worden, so übergibt die Spindeleinheit 5 das letzte Werkzeug oder Aggregat an das Werkzeug- und Aggregatemagazin 9 und verfährt im Anschluß daran in den Bereich der Kantenanleimstation 11.

Während der oben beschriebenen Bearbeitung des Werkstückes 8 ist in der Kantenanleimstation 11 bereits der Kantenanleimvorgang vorbereitet worden. So ist in dem jeweiligen Versorgungsmodul 14 eine bestimmte Leimmenge aufbereitet und auf Verarbeitungstemperatur gebracht worden. Ferner ist die jeweils für den nachfolgenden Arbeitsvorgang erforderliche Leimmenge von dem jeweiligen Versorgungsmodul 14 auf die zugeordnete Anleimeinheit 13 übergeben worden. Parallel dazu ist über die Einrichtung 16 Kantenmaterial aus dem Kantenmagazin 17 abgezogen und auf die jeweilige Anleimeinheit 13 übergeben worden. Die Spindeleinheit 5 übernimmt nun, vorzugsweise im Pick-up-Verfahren, die in der beschriebenen Weise vorbereitete und bestückte Anleimeinheit 13 und führt den am Werkstück 8 erforderlichen Anleimvorgang durch. Ist dieser Anleimvorgang abgeschlossen, so verbringt die Spindeleinheit 5 die jeweilige Anleimeinheit 13 zurück in den Bereich der Kantenanleimstation 11 und setzt sie auf dem zugeordneten Versorgungsmodul 14 ab. Nach dem Absetzen kann die jeweilige Anleimeinheit dann auf dem Versorgungsmodul 14 für den nächsten Arbeitsgang vorbereitet werden. In dieser Zeit kann die Spindeleinheit 5 im Bedarfsfalle die danebenliegende Anleimeinheit 13 übernehmen und einen weiteren Anleim- oder anderen Vorgang durchführen.

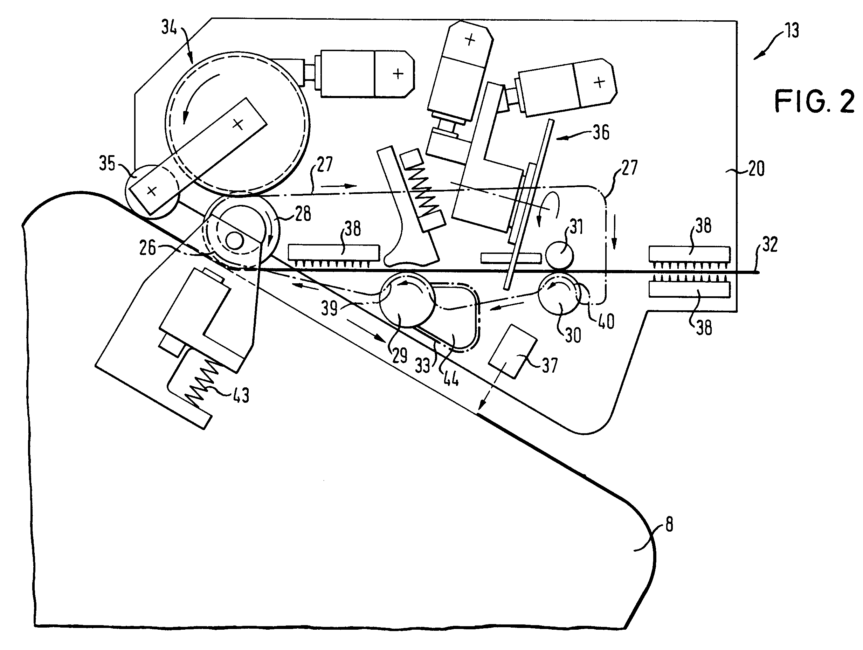

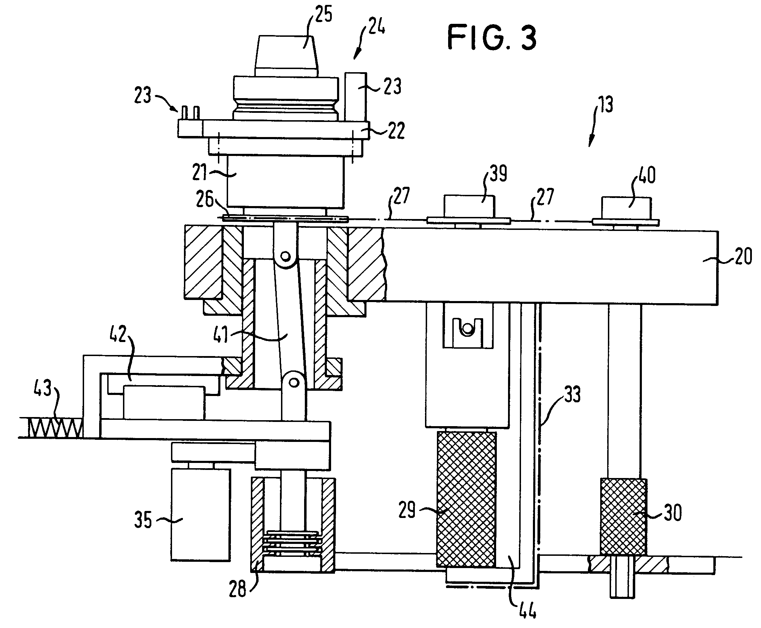

Ein Ausführungsbeispiel einer derartigen Anleimeinheit 13 ist schematisch in den Fig. 2 und 3 dargestellt.

Wie aus den Fig. 2 und 3 hervorgeht, umfaßt die Anleimeinheit 13 eine Grundplatte 20, auf deren Oberseite ein Untersetzungsgetriebe 21 befestigt ist. Auf der Oberseite des Untersetzungsgetriebes 21 ist eine Platte 22 angeordnet, die Aufnahmen 23 einer Schnittstelle 24 trägt, mit der die Anleimeinheit 13 an die Spindeleinheit 5 (vgl. Fig. 1) ankoppelbar ist. Die Aufnahmen 23 besitzen nicht dargestellte Anschlußelemente für Pneumatik sowie Antriebs- und Steuerstrom. Zwischen den Aufnahmen 23 ist ein Kegel 25 einer Hohlschaftkegelaufnahme angeordnet, der ebenfalls Bestandteil der Schnittstelle 24 ist. Über den Kegel 25 wird das über die Spindeleinheit 5 angelieferte Drehmoment in das Untersetzungsgetriebe 21 eingeleitet und von dort auf ein Kettenrad 26 übertragen, welches eine Kette 27 antreibt, deren Aufgabe später noch beschrieben werden wird.

Die Grundplatte 20 trägt eine Reihe von Elementen, von denen im folgenden jedoch nur die zum Verständnis der Erfindung erforderlichen Elemente beschrieben werden.

So trägt die Grundplatte 20 die Aufhängung und Lagerung für eine Andruckrolle 28, die Lagerung einer Leimauftragswalze 29 sowie die Lagerung für eine Antriebswalze 30 mit Gegenwalze 31 für das Kantenmaterial 32.

Im Bereich der Leimauftragswalze 29 trägt die Grundplatte 20 einen Leimbehälter 44 mit Isolierung 33.

Auf der Oberseite der Grundplatte 20 sind zudem eine Anzahl von Einheiten (vgl. Fig. 2) aufgebaut, die zur Vorbereitung bzw. Bearbeitung des Kantenmaterials 32 dienen. Diese Einheiten, wie beispielsweise eine Nachdrückeinheit 34 mit Nachdrückrolle 35, eine Kappsäge 36 mit Kantenendesensor 37 sowie Einrichtungen 38 zum Erwärmen des Kantenmaterials 32 sind bekannt und bedürfen daher keiner weiteren Erläuterung. Zum Verständnis sei lediglich angemerkt, daß über das ausgangsseitig am Übersetzungsgetriebe 21 angeordnete Kettenrad 26 und die Kette 27 über entsprechende Kettenräder 39 und 40 die Leimauftragswalzen 29 bzw. die Antriebswalze 30 für das Kantenmaterial angetrieben werden.

Für einen Anleimvorgang mit der erfindungsgemäßen Anleimeinheit 13 wird das für einen Arbeitsgang erforderliche Kantenmaterial 32 über die Antriebswalze 30 mit Gegenwalze 31 in den Bereich der Leimauftragswalze 29 geführt, und mit dieser mit Leim aus dem Leimbehälter 44 einseitig beschichtet.

Das in dieser Weise mit Leim beschichtete Kantenmaterial 32 wird über die Andruckrolle 28 an die im vorangegangenen Arbeitsgang vorbereitete Kante des Werkstückes 8 angepreßt und mit der Nachdrückrolle 35 nachgepreßt.

Die Anleimeinheit 13 wird dann in bekannter Weise um das Werkstück herumgeführt, bis der Kantenendesensor 37 der Kappsäge 36 das Signal für den Kappvorgang ergibt. Das auf diese Weise gebildete Ende des Kantenmaterials 32 wird dann in der Folge zur Erzielung einer 360° Verleimung über die verbleibende Strecke mittels der Andruckrolle 28 und der Nachdrückrolle 35 an das Werkstück 8 angepreßt.

Wie aus Fig. 3 hervorgeht, ist die Andrückrolle 28 über ein Kreuzgelenk 41 mit dem Untersetzungsgetriebe 21 verbunden. Aufgrund des Kreuzgelenks kann die Andruckrolle 28 radial über einen bestimmten Weg verschoben werden. Zu diesem Zweck ist eine Geradführung 42 mit Federanordnung 43 vorgesehen. Auch diese sog. Tastanordnung ist im Prinzip bekannt, so daß sich ein weiteres Eingehen erübrigt.

## Patentansprüche

1. Einrichtung zur Durchführung von Bearbeitungsvorgängen an Werkstücken (8), insbesondere an plattenförmigen Werkstücken aus Holz bzw. Holzwerkstoffen, mit
- einer Spindeleinheit (5) zur Aufnahme von Bearbeitungswerkzeugen und Bearbeitungsaggregaten,
- einer Führungsanordnung (6) zur Bewegung der Spindeleinheit (5) zumindest in X- und Y-Richtung,
- einem Bearbeitungstisch (7) zur Aufnahme mindestens eines zu bearbeitenden Werkstücks,
- sowie einem der Spindeleinheit zugeordneten Werkzeug- und Aggregate-Magazin (9) zur Aufnahme der ein- und auszuwechselnden Bearbeitungswerkzeuge und Bearbeitungsaggregate
**dadurch gekennzeichnet, daß**
- die Einrichtung eine Kantenanleimstation (11) aufweist, die aus einer im wesentlichen stationär angeordneten Versorgungseinheit (12) und mindestens einer von dieser abkoppelbaren Anleimeinheit (13) besteht, welche in die Spindeleinheit (5) einwechselbar ist.

2. Einrichtung nach Anspruch 1,
**dadurch gekennzeichnet, daß**
die Kantenanleimstation (11) als zusätzlich zum Werkzeug- und Aggregatemagazin (9) vorgesehene, separate Station ausgebildet ist.

3. Einrichtung nach Anspruch 2,
**dadurch gekennzeichnet, daß**
die Kantenanleimstation (11) seitlich im Bereich des Endes des Verfahrweges der Spindeleinheit (5) in X-Richtung angeordnet ist.

4. Einrichtung nach Anspruch 1, 2 oder 3,
**dadurch gekennzeichnet, daß**
die Versorgungseinheit (12) der Kantenanleimstation (11) fest mit der Führungsanordnung (6) verbunden ist.

5. Einrichtung nach Anspruch 1, 2 oder 3,
**dadurch gekennzeichnet, daß**
die Versorgungseinheit (12) der Kantenanleimstation (11) entlang einer Führung (15) verschiebbar angeordnet ist.

6. Einrichtung nach Anspruch 1, 2 oder 3,
**dadurch gekennzeichnet, daß**
die Versorgungseinheit (12) der Kanteneinleimstation (11) eine Anleimeinheit (13) aufweist.

7. Einrichtung nach Anspruch 1, 2 oder 3,
**dadurch gekennzeichnet, daß**
die Versorgungseinheit (12) der Kantenanleimstation (11) mehrere Anleimeinheiten (13) aufweist.

8. Einrichtung nach Anspruch 1, 2 oder 3,
**dadurch gekennzeichnet, daß**
die Versorgungseinheit (12) der Kantenanleimstation (11) aus mehreren Versorgungsmodulen (14) besteht, an die jeweils eine Anleimeinheit (13) ankoppelbar ist.

9. Einrichtung nach Anspruch 8,
**dadurch gekennzeichnet, daß**
die Versorgungsmodule (14) entlang einer Führung (15) in Grenzen verschiebbar angeordnet sind.

10. Einrichtung nach Anspruch 8,
**dadurch gekennzeichnet, daß**
die Versorgungsmodule (14) auf einem Drehteller angeordnet sind.

11. Einrichtung nach Anspruch 6 bis 10,
**dadurch gekennzeichnet, daß**
die Anleimeinheiten (13) im Pick-up-Verfahren an die Spindeleinheit (5) ankoppelbar sind.

12. Einrichtung nach Anspruch 4 bis 11,
**dadurch gekennzeichnet, daß**
die Versorgungseinheit (12) bzw. die Versorgungsmodule (14) Einheiten zum Vor- und Aufbereiten sowie zum Übergeben von Leim an die Anleimeinheit bzw. Anleimeinheiten aufweisen.

13. Einrichtung nach Anspruch 4 bis 22,
**dadurch gekennzeichnet, daß**
die Versorgungseinheit (12) bzw. die Versorgungsmodule (14) Einrichtungen zum Zuführen von Kantenmaterial (32) zu der Anleimeinheit bzw. den Anleimeinheiten (13) aufweisen.

14. Einrichtung nach Anspruch 6 bis 11,
**dadurch gekennzeichnet, daß**
die Anleimeinheit (13) ein Untersetzungsgetriebe (21) aufweist.

15. Einrichtung nach Anspruch 6 bis 11,
**dadurch gekennzeichnet, daß**
die Anleimeinheit (13) einen eigenen Antrieb aufweist.

16. Einrichtung nach Anspruch 1 bis 15,
**dadurch gekennzeichnet, daß**
das Einwechseln der Anleimeinheit (13) in die Spindeleinheit (5) über eine Hohlschaftkegelaufnahme erfolgt.

17. Einrichtung nach Anspruch 16,
**dadurch gekennzeichnet, daß**
im Bereich des Umfanges der Hohlschaftkegelaufnahme weitere Aufnahmen (23) vorgesehen sind, die zusammen mit der Hohlschaftkegelaufnahme eine statisch belastbare Schnittstelle (24) bilden.

18. Einrichtung nach Anspruch 17,
**dadurch gekennzeichnet, daß**
die weiteren Aufnahmen (23) Anschlußelemente für Pneumatik sowie Antriebs- und Steuerstrom aufweisen.

## Claims

1. Apparatus for carrying out working operations on workpieces (8), in particular on board-like workpieces made of wood or wood materials, with
- a spindle unit (5) for receiving working tools and working units,
- a guide assembly (6) for movement of the spindle unit (5) at least in X and Y directions,
- a working bench (7) for receiving at least one workpiece to be worked,
- and a tool and unit magazine (9) associated with the spindle unit for receiving the working tools and working units to be inserted and removed,
characterised in that
- the apparatus comprises an edge glueing station (11) consisting of an essentially stationarily arranged supply unit (12) and at least one glueing unit (13) which can be uncoupled from the latter and which can be inserted in the spindle unit (5).

2. Apparatus according to claim 1, characterised in that the edge glueing station (11) is designed as a separate station provided in addition to the tool and unit magazine (9).

3. Apparatus according to claim 2, characterised in that the edge glueing station (11) is arranged laterally in the region of the end of the path of travel of the spindle unit (5) in the X direction.

4. Apparatus according to claim 1, 2 or 3, characterised in that the supply unit (12) of the edge glueing station (11) is rigidly connected to the guide assembly (6).

5. Apparatus according to claim 1, 2 or 3, characterised in that the supply unit (12) of the edge glueing station (11) is arranged slidably along a guide (15).

6. Apparatus according to claim 1, 2 or 3, characterised in that the supply unit (12) of the edge glueing station (11) comprises a glueing unit (13).

7. Apparatus according to claim 1, 2 or 3, characterised in that the supply unit (12) of the edge glueing station (11) comprises several glueing units (13).

8. Apparatus according to claim 1, 2 or 3, characterised in that the supply unit (12) of the edge glueing station (11) consists of several supply modules (14) to each of which can be coupled a glueing unit (13).

9. Apparatus according to claim 8, characterised in that the supply modules (14) are arranged slidably within limits along a guide (15).

10. Apparatus according to claim 8, characterised in that the supply modules (14) are arranged on a turntable.

11. Apparatus according to claims 6 to 10, characterised in that the glueing units (13) can be coupled to the spindle unit (5) by the pick-up method.

12. Apparatus according to claims 4 to 11, characterised in that the supply unit (12) or supply modules (14) comprise units for preparation and treatment as well as for transfer of glue to the glueing unit or units.

13. Apparatus according to claims 4 to 22, characterised in that the supply unit (12) or supply modules (14) comprise means for the supply of edge material (32) to the glueing unit or units (13).

14. Apparatus according to claims 6 to 11, characterised in that the glueing unit (13) comprises a reduction gear mechanism (21).

15. Apparatus according to claims 6 to 11, characterised in that the glueing unit (13) comprises its own drive.

16. Apparatus according to claims 1 to 15, characterised in that the glueing unit (13) is inserted in the spindle unit (5) by a hollow-shaft cone receptacle.

17. Apparatus according to claim 16, characterised in that in the region of the circumference of the hollow-shaft cone receptacle are provided further receptacles (23) which together with the hollow-shaft cone receptacle form an interface (24) capable of taking a static load.

18. Apparatus according to claim 17, characterised in that the further receptacles (23) comprise connecting elements for pneumatics as well as driving and control current.

## Revendications

1. Dispositif pour effectuer des processus d'usinage sur des pièces (8), en particulier sur des pièces en forme de plaque, en bois ou en matériau à base de bois, avec
- une unité à broche (5) destinée à supporter des outils d'usinage et des groupes d'usinage,
- un dispositif de guidage (6) destiné au déplacement de l'unité à broche (6) au moins dans les directions X et Y,
- une table d'usinage (7) destinée à supporter au moins une pièce à usiner,
- ainsi qu'un magasin à outils et à groupes (9), associé à l'unité à broche, pour supporter les outils d'usinage et des groupes d'usinage à introduire et à sortir pour le remplacement,
caractérisé en ce que
- le dispositif présente un poste d'encollage sur pièce de chant (11), qui est constitué d'une unité d'alimentation (12) disposée de façon sensiblement stationnaire et d'au moins une unité d'encollage susceptible d'être désaccouplée de celle-ci, pouvant être introduite de façon remplaçable dans l'unité à broche (5).

2. Unité selon la revendication 1, caractérisée en ce que le poste d'encollage sur pièce de chant (11) est réalisé sous la forme d'un poste séparé, prévu en plus du magasin à outils et à groupes (9).

3. Dispositif selon la revendication 2, caractérisé en ce que le poste d'encollage sur pièce de chant (11) est disposé latéralement dans la zone de l'extrémité de la course de déplacement de l'unité à broche (5), dans la direction X.

4. Dispositif selon la revendication 1, 2 ou 3, caractérisé en ce que l'unité d'alimentation (12) du poste d'encollage sur pièce de chant (11) est reliée rigidement au dispositif de guidage (6).

5. Dispositif selon la revendication 1, 2 ou 3, caractérisé en ce que l'unité d'alimentation (12) du poste d'encollage sur pièce de chant (11) est disposée déplaçable le long d'un guidage (15).

6. Dispositif selon la revendication 1, 2 ou 3, caractérisé en ce que l'unité d'alimentation (12) du poste d'encollage sur pièce de chant (11) présente une unité d'encollage (13).

7. Dispositif selon la revendication 1, 2 ou 3, caractérisé en ce que l'unité d'alimentation (12) du poste d'encollage sur pièce de chant (11) présente plusieurs unités d'encollage (13).

8. Dispositif selon la revendication 1, 2 ou 3, caractérisé en ce que l'unité d'alimentation (12) du poste d'encollage sur pièce de chant (11) est constituée de plusieurs modules d'alimentation (14) pouvant être couplés chacun à une unité d'encollage (13).

9. Dispositif selon la revendication 8, caractérisé en ce que les modules d'alimentation (14) sont disposés déplaçable dans des limites déterminées le long d'un guidage (15).

10. Dispositif selon la revendication 8, caractérisé en ce que les modules d'alimentation (14) sont disposés sur un plateau tournant.

11. Dispositif selon les revendications 6 à 10, caractérisé en ce que les unités d'encollage (13) sont susceptibles d'être accouplées à l'unité à broche (5), dans un procédé à prélèvement.

12. Dispositif selon les revendications 4 à 11, caractérisé en ce que l'unité d'alimentation (12) ou les modules d'alimentation (14) présentent des unités pour la préparation et la mise en place, ainsi que pour le transfert de la colle à l'unité d'encollage ou aux unités d'encollage.

13. Dispositif selon les revendications 4 à 12, caractérisé en ce que l'unité d'alimentation (12) ou les modules d'alimentation (14) présentent des dispositifs permettant d'amener du matériau de pièce de chant (32) à l'unité d'encollage ou aux unités d'encollage (13).

14. Dispositif selon les revendications 6 à 11, caractérisé en ce que l'unité d'encollage (13) présente une transmission à réduction de vitesse (21).

15. Dispositif selon les revendications 6 à 11, caractérisé en ce que l'unité d'encollage (13) présente un entraînement propre.

16. Dispositif selon les revendications 1 à 15, caractérisé en ce que l'introduction remplaçable de l'unité d'encollage (13) dans l'unité à broche (5) s'effectue par l'intermédiaire d'un logement conique à tige creuse.

17. Dispositif selon la revendication 16, caractérisé en ce que dans la zone de la périphérie du logement conique à tige creuse sont prévus d'autres logements (23) qui constituent, conjointement avec le logement conique à tige creuse, une interface (24) pouvant être chargée statiquement.

18. Dispositif selon la revendication 17, caractérisé en ce que les autres logements (23) présentent des éléments de raccordement destinés à de la pneumatique ainsi qu'à un courant d'entraînement et de commande.
